# FASCICULE DE BREVET EUROPEEN

(11) **EP 0 966 805 B1**
(45) Date de publication et mention de la délivrance du brevet: **28.08.2002**
(21) Numéro de dépôt: 98913887.0
(22) Date de dépôt: 11.03.1998
(51) Int. Cl.: H04B 7/26

(54) **PROCEDE DE TRANSMISSION DE DONNEES ENTRE DES MOYENS DE TRAITEMENT DE DONNEES ET UN RESEAU DE RADIOCOMMUNICATION ET MODULE ET TERMINAL MOBILE POUR LA MISE EN OEUVRE DU PROCEDE**
VERFAHREN ZUR DATENÜBERTRAGUNG ZWISCHEN DATENVERARBEITENDEN MITTELN UND EINEM RADIOKOMMUNIKATIONSNETZ UND MODUL UND MOBILES ENDGERÄT ZUR DURCHFÜHRUNG DES VERFAHRENS
METHOD FOR TRANSMITTING DATA BETWEEN DATA PROCESSING MEANS AND A RADIO COMMUNICATION NETWORK, MODULE AND MOBILE TERMINAL FOR IMPLEMENTING SAME

(30) Priorité: 12.03.1997 FR 9702929
(43) Date de publication de la demande: 29.12.1999
(73) Titulaire: SAGEM SA, 75116 Paris (FR)
(72) Inventeur: DIMECH, Jean-Marc, F-60240 Chaumont en Vexin (FR)
(74) Mandataire: Bloch, Gérard
(86) Numéro de dépôt international: FR9800490
(87) Numéro de publication internationale: WO98040979

(56) Documents cités:
- EP-A- 0 318 685
- EP-A- 0 630 141
- EP-A- 0 655 873
- WO-A-91/10305
- US-A- 4 129 755
- US-A- 4 276 651
- US-A- 5 517 521

## Description

Les réseaux radio de communication se sont développés ces dernières années pour transmettre des signaux vocaux depuis ou vers des postes radiotéléphoniques mobiles. Afin de se prémunir contre le bruit radio, l'évolution s'est faite vers les transmissions numériques, avec un codage de la voix. De ce fait, un réseau comme le réseau GSM, par exemple, permet aussi de transmettre des données avec un combiné portatif. On peut ainsi émettre des messages courts de données, donc un trafic très limité, dans un canal radio commun réservé en principe à la signalisation d'établissement et de rupture des communications des divers combinés.

On peut encore raccorder un appareil de traitement de données, comme un PC, au réseau radio. En sortie du PC, on interpose un adaptateur de données pour, par exemple en émission, présenter les données selon un format compatible avec celui prévu pour la transmission sur le réseau. Il peut en outre être prévu d'insérer des données de signalisation pour gérer la communication radio. L'adaptateur effectue donc un changement de format, ou codage, des données provenant du PC et procède à l'opération inverse en réception. Cependant, afin d'éviter les erreurs de transmission, il se pose le problème de la synchronisation et de l'adaptation entre le réseau radio et le PC qui n'est pas en liaison directe avec celui-ci.

Le problème serait d'ailleurs le même si l'application traitement de données était intégrée dans le combiné ou tout autre terminal radio, fixe ou mobile.

EP 0 630 141 A2 enseigne un système de communication reliant un PC à un réseau téléphonique numérique pour échanger des télécopies.

EP 0 655 873 A2 enseigne un adaptateur de données pour relier un PC à un combiné d'un réseau numérique de radiotéléphonie, à travers un bus présentant un débit supérieur à celui du réseau. Le bus n'est cependant qu'un maillon de la liaison entre le PC et le combiné.

La présente invention vise à résoudre le problème évoqué plus haut.

A cet effet, l'invention concerne tout d'abord un procédé de transmission de données entre un réseau de radiocommunication, transmettant les données à un rythme déterminé, et des moyens de traitement de données raccordés au réseau par des moyens d'accès comportant des moyens radio d'interface réseau, raccordés à des moyens adaptateurs de données, interposés entre les moyens radio et les-moyens de traitement des données pour les adapter au réseau, dans lesquels transitent les données sous la commande de moyens séquenceurs, procédé caractérisé par le fait qu'on asservit les moyens séquenceurs sur le rythme du réseau pour synchroniser sur celui-ci le transit des données à travers les moyens adaptateurs.

Ainsi, le transit des données, à travers les moyens adaptateurs, au rythme du réseau permet des échanges sans erreurs avec le réseau puisque ceux-ci sont synchronisés sur ce rythme. On peut ainsi déporter le rythme du réseau jusqu'aux moyens de traitement à travers les moyens adaptateurs. En effet, ceux-ci appréhendent les données provenant des moyens de traitement au rythme du réseau, ce qui fournit aux moyens de traitement l'information recherchée. Dans le cas d'une réception de données par ceux-ci, c'est le rythme de cette réception qui fournit cette information.

On remarquera que US A 4276 651 enseigne un réseau radio et des circuits radio d'accès au réseau associés à un modem comportant un bloc d'horloge asservi par le réseau. Mais ce document n'enseigne pas de moyens de traitement de données, de moyens adaptateurs de données pour les adapter à un réseau, ni de moyens séquenceurs pour synchroniser sur le réseau le transit des données à travers des moyens adaptateurs. Ce document enseigne un convertisseur numérique/analogique classique d'émission et non un adaptateur de données.

Quant au document US A 5517 521, il enseigne de réguler le débit en fonction du taux de remplissage des tampons et non de la fréquence du réseau.

L'invention concerne aussi un module de transmission de données pour la mise en oeuvre du procédé de l'invention, comportant des moyens radio d'interface avec un réseau de radiocommunication transmettant les données à un rythme déterminé, des moyens adaptateurs de données, agencés pour être interposés entre les moyens radio et des moyens de traitement de données et les adapter au réseau, dans lesquels transitent les données sous la commande de moyens séquenceurs, caractérisé par le fait que les moyens séquenceurs et les moyens adaptateurs sont regroupés dans une unité centrale comportant des moyens d'asservissement en fréquence des moyens séquenceurs sur le rythme du réseau.

Les moyens adaptateurs étant intégrés avec les moyens radio, aucun problème de décalage temporel, ou désynchronisation, ne se pose entre ceux-ci puisqu'ils peuvent être reliés directement entre eux, sans câble ni circuit amplificateur de transmission. De plus, cette intégration permet d'utiliser en partage de temps des moyens communs, ce qui limite le volume de matériel et sa consommation.

L'invention concerne enfin un terminal mobile de radiotéléphonie intégrant le module de l'invention et plus particulièrement un terminal mobile de radiotéléphonie intégrant le module qui peut intégrer lui-même les circuits de traitement.

L'invention sera mieux comprise à l'aide de la description suivante d'une forme de réalisation préférée d'un terminal mobile de radiotéléphonie pour la mise en oeuvre du procédé de l'invention, en référence au dessin annexé, sur lequel :

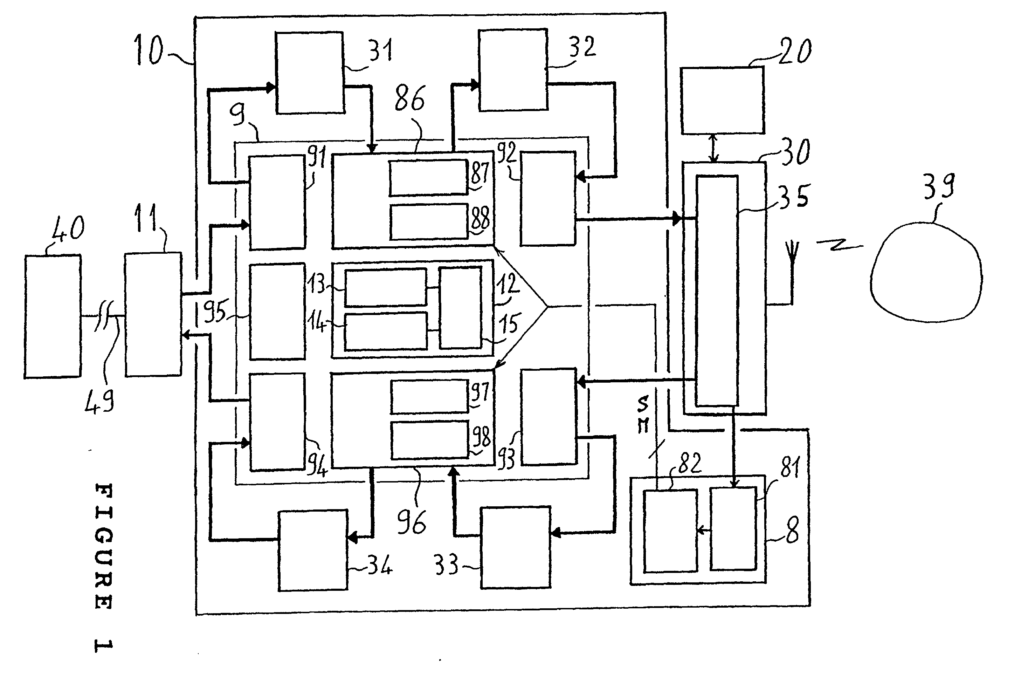

- la figure 1 est un schéma par blocs du terminal, raccordé à un PC,

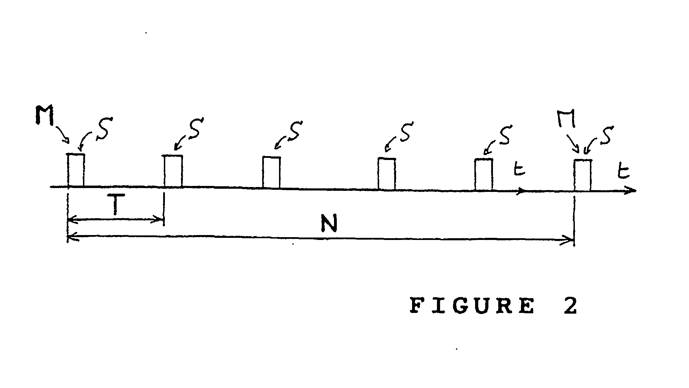

- la figure 2 est un diagramme temporel expliquant le séquencement du terminal, en fonction du temps t en abscisse.

Le terminal représenté, ici un combiné mobile de radiotéléphonie 11, 10, 20, 30, comporte une unité centrale 10 reliée, ici de façon bidirectionnelle, d'une part, à un circuit 30 avec modem 35 d'interface radio en émission/réception avec un réseau de radiocommunication 39, ici le réseau de radiotéléphonie GSM permettant la transmission de données, et, d'autre part, à un circuit d'interface locale de transmission 11, ici à la norme V24, relié à un PC 40 par une liaison 49, pour offrir à celui-ci un accès au réseau GSM 39.

Pour mémoire, on a schématisé, par le bloc 20 raccordé au circuit radio 30, les circuits classiques de numérotation et de communication vocale, comportant en particulier un clavier, un microphone, un haut-parleur et leurs circuits d'interface. L'unité centrale 10 gère le bloc 20, par des liaisons non représentées.

L'unité centrale 10 comporte un microprocesseur 9, quatre registres tampon 31, 32, 33 et 34 et une base de temps 8, comportant un oscillateur 81 suivi de diviseurs de fréquence 82, commandant le microprocesseur 9. Ce dernier comporte quatre registres tampon de transit 91, 92, 93 et 94, deux ensembles de calcul, d'adaptation de données, 86 et 96, un ensemble 12 de traitement de signalisation avec un circuit 13 pour les signalisations téléphoniques classiques, en mode circuit, et un circuit 14 traitant les signalisations en mode paquet, tous deux raccordés à un circuit 15 gérant la signalisation GSM (niveau 3 de la normalisation internationale pour les systèmes ouverts OSI). L'unité centrale 10, et plus précisément ici le microprocesseur 9, comporte en outre un ensemble 95 de traitement de données qui y est intégré pour gérer une application, ici des données échangées à travers le réseau 39 avec des serveurs de la marque protégée INTERNET.

Une voie d'émission de données à émettre sur le réseau 39 part du circuit 11 d'interface V24 et aboutit au circuit radio 30 en traversant, dans l'ordre de propagation des données, le registre de transit 91, le registre tampon 31, l'ensemble d'adaptation 86, le registre tampon 32 et enfin le registre de transit 92.

L'ensemble d'adaptation 86 comporte un circuit 87 de traitement de données de signalisation de type téléphonique et un circuit 88 de données de signalisation de type MINITEL. L'ensemble d'adaptation 96, recevant les données provenant du réseau 39, comporte de même des circuits 97 et 98 fonctionnellement homologues des circuits respectifs 87 et 88. Il aurait cependant pu être prévu des circuits intégrés séparés pour les ensembles 86, 95, 96, par exemple des circuits à la demande (ASIC) ou un processeur de signal (DSP) commandés par le microprocesseur 9, c'est-à-dire formant fonctionnellement une unité avec lui.

On comprendra que cette représentation par blocs fonctionnels a pour unique but la clarté de l'exposé. En pratique, les ensembles 12, 86, 95 et 96 sont en fait des tâches exécutées en temps partagé par des circuits communs du microprocesseur 9. On conçoit que les diverses liaisons point à point représentées n'ont qu'un but didactique pour exposer clairement les étapes de cheminement des données et qu'en fait il s'agit d'un bus reliant les divers circuits et exploité séquentiellement en partage de temps par les diverses tâches établissant ces liaisons point à point. Les registres de transit 91 à 94 sont de ce fait physiquement un seul registre exploité en temps partagé. Les registres tampon 31 à 34 peuvent de même n'être qu'un seul registre physique, éventuellement intégré au microprocesseur 9.

L'intégration dans le combiné GSM de l'adaptation des données évite ainsi la nécessité d'une carte à microprocesseur raccordée à celui-ci pour effectuer cette adaptation. Le volume total, et la consommation, du matériel reste ainsi limité d'autant que l'unité centrale 10, ou microprocesseur 9, unique gère elle-même, donc de façon centralisée, multitâche, le séquencement de ses tâches (comme 86, 95, 96), sans nécessité de raccorder une carte externe d'adaptation à microprocesseur, donc sans perte de temps correspondant aux négociations qui seraient nécessaires en pareil cas dans le système décentralisé qui serait alors réalisé.

En sens inverse, une voie de réception de données radio part du circuit radio 30, traverse les circuits 93, 33, 96, 34, 94 et aboutit au circuit 11.

Le fonctionnement du terminal GSM avec le PC 40 et l'ensemble 95 de traitement des données va maintenant être expliqué.

Pour une transmission de données entre le PC 40 et un autre appareil de transmission de données relié au réseau GSM 39, directement ou à travers un autre réseau, l'ensemble 10 assure l'adaptation des données échangées entre les deux appareils, afin qu'elles puissent être transmises à travers le réseau GSM 39.

Dans un premier cas, d'établissement d'une liaison de données en mode téléphonique ou "circuit" vers un appareil relié au réseau GSM 39, directement ou à travers le réseau analogique RTC, un utilisateur commande, à partir du PC 40, l'émission du numéro de téléphone de l'appareil appelé. Le numéro émis sur la liaison 49 est reçu par le circuit 13 à travers les circuits 11 et 91. L'unité centrale 10 analyse à cet effet la signalisation reçue du PC 40 et l'aiguille vers le circuit 13 ou le circuit 14 selon sa nature : téléphonique, mode circuit, ou de type MINITEL, mode paquet. Ce numéro est transmis au circuit 15 qui gère l'établissement de la communication GSM, et en particulier assure les fonctions de la couche de niveau 3 dans les sept couches de la classification internationale OSI. Ainsi, le circuit 15 échange, par le modem 35, une séquence de messages de signalisation avec le réseau GSM 39 et adapte cette séquence en fonction des messages de signalisation reçus de celui-ci en réponse à chaque message, afin de gérer l'établissement et la rupture d'une communication, c'est-à-dire le lien physique portant la liaison logique d'application entre les deux appareils de traitement de données. Le circuit 15 commande aussi le modem 35 de connexion au réseau 39, en ce sens qu'il peut le configurer selon des paramètres déterminés, comme par exemple sa vitesse et sa fréquence de modulation.

Une fois la communication établie, à travers le réseau 39, entre le PC 40 et l'appareil appelé, la transmission des données entre eux fait intervenir les ensembles 86 et 96 pour adapter les données à échanger. Les circuits 87 et 97 assurent en particulier l'adaptation des données entre l'interface V24 et le réseau GSM 39 en ce qui concerne leur format de présentation, respectivement en émission depuis le PC 40 vers le circuit radio 30 et en réception, de celui-ci vers le PC 40. Il s'agit ici de la fonction RA1' de la recommandation ETSI 04.21, concernant l'assemblage / désassemblage de trames V110 de 36 ou 60 bits utiles. On conçoit que d'autres normes d'adaptation de niveau 2, comme l'ECMA 102, sont envisageables. L'interface V24 transmet en mode asynchrone à 2,4, 4,8 ou 9,6 kb/s, tandis que, côté réseau GSM 39, les bits sont échangés à un débit synchrone déterminé de 3,6, ou 6 ou encore 12 kb/s. Le circuit 88 réalise la fonction RA0 de la recommandation 04.21, c'est-à-dire l'adaptation de débit, entre données asynchrones et données synchrones, vers le débit supérieur 2ⁿ x 600 bits/s le plus proche (n : entier positif), par bourrage ou suppression de bits "stop", le circuit 98 effectuant l'opération inverse.

Dans un second cas, d'établissement d'un appel du PC 40 vers un serveur MINITEL, le principe d'établissement de la communication est le même que ci-dessus mais fait intervenir les circuits 14, 87 et 88.

Des communications par appel du PC 40 à partir d'un appareil relié au réseau radio 39 peuvent de même être établies.

Dans cet exemple, l'ensemble 10 sert de circuit d'adaptation (niveau 2) et de gestion des protocoles de communication (niveau 3) pour l'établissement des liaisons radio transmettant les données à travers le réseau GSM 39. En d'autres termes, le terminal GSM, le réseau 39 et un autre terminal GSM semblable raccordant l'autre appareil de transmission de données sont transparents vis-à-vis de l'application, ou traitement, (couches logicielles de niveau 7).

Cependant, il est ici prévu que l'ensemble 10 comporte, en plus de l'adaptation et des protocoles de gestion des liaisons radio, des fonctions relatives à des couches OSI dépassant le niveau 3, et en particulier traite au moins une partie de l'application relative aux données transmises.

Ici, l'ensemble 95, qui se substitue au PC 40 et au circuit 11, comporte ainsi les couches OSI de niveau supérieur à 3 pour traiter des applications (niveau 7) avec des données transmises sur le réseau INTERNET, raccordé au réseau GSM 39. Le clavier de l'ensemble 20 et un afficheur non représentés sont contrôlés par le microprocesseur 9 sous la commande d'un logiciel de relations homme-machine. On peut ainsi afficher des pages fournies par les serveurs et naviguer dans le réseau INTERNET en appelant le serveur choisi.

Le cheminement détaillé des données pour les étapes élémentaires par lesquelles elles passent va être précisé ci-dessous, puis leur séquencement, en revenant à l'exemple de la liaison radio avec le PC 40.

Les bits émis par le PC 40 sur la liaison V24 référencée 49 sont reçus dans le circuit 11 sous la forme d'octets série encadrés par des bits de START et de STOP et mémorisés temporairement dans un circuit UART de l'interface 11. Lorsqu'un octet complet a été reçu, le circuit d'interface 11 émet une requête de transmission vers le microprocesseur 9 et celui-ci se libère ainsi que le bus. L'UART du circuit 11 émet alors, en entrée de la voie d'émission, l'octet considéré sur le bus et le registre de transit 91 le mémorise temporairement pour le retransmettre au registre tampon 31, qui sert de tampon d'entrée pour des blocs de données qui seront traités par l'ensemble 86. Lorsqu'un bloc de données, de taille suffisante pour une trame V110, a été stocké dans le registre 31, le microprocesseur 9, qui en gère l'écriture, ou recharge, et la lecture, ou vidage, peut détecter que le seuil suffisant de remplissage a été atteint. Le microprocesseur 9 transfère alors le bloc de données du registre 31 dans un registre de travail, non représenté, de l'ensemble 86. Un logiciel commande alors le microprocesseur 9 pour exécuter la tâche d'adaptation des données indiquée ci-dessus et fournir ainsi une trame V110 qui est stockée temporairement dans un registre de travail local de sortie, non représenté. Celui-ci est ensuite vidé dans le registre tampon 32 afin de libérer, pour d'autres tâches, les registres de travail du microprocesseur 9. Le contenu du registre tampon 32 est par la suite transmis au modem radio GSM 35 par une tâche de transfert en deux étapes, en passant par le registre tampon de transit 92, selon le processus déjà expliqué pour le registre 91.

Le principe de la transmission, sur la voie de réception, des données radio reçues, de l'interface radio 30 au circuit 11 d'interface V24, est semblable à celui qui vient d'être exposé pour la voie d'émission et il ne sera donc pas décrit plus avant, hormis le fait que l'ensemble 96 effectue la conversion inverse de celle de l'ensemble 86, pour fournir des données V24, en particulier exemptes de bits de bourrage.

La synchronisation des diverses étapes ci-dessus va maintenant être précisée.

L'oscillateur 81 de la base de temps 8 oscille sur une fréquence déterminée en fonction du rythme de transmission des données sur le réseau GSM 39. Cette fréquence déterminée n'est pas obligatoirement égale à ce rythme, mais elle présente avec lui un rapport, entier ou fractionnaire, constant. Dans cet exemple, afin de se prémunir de la dérive possible de l'oscillateur, celui-ci est relié en entrée à l'interface radio 30 pour recevoir du modem 35 le rythme du réseau GSM 39 et s'asservir dessus. Le rythme du réseau 39 est en pratique défini à partir de la fréquence de la porteuse radio qui asservit à cette fréquence l'oscillateur 81. Les diviseurs de fréquence 82 fournissent régulièrement au microprocesseur 9 des impulsions cycliques à plus faible rythme, ici des triplets d'impulsions S réparties sur une période T de 60 ms, chaque impulsion S respective étant suivie d'une période de 4/13, 4/13 et 5/13 des 60 ms. En outre, les diviseurs 82 fournissent, sur une autre sortie, une impulsion basse fréquence M, dite de motif, à chaque fois que, ici, cinq des impulsions S ci-dessus ont été engendrées, c'est-à-dire environ tous les N = 100 ms.

La base de temps 8 fournit en outre des signaux d'horloge haute fréquence (MHz) commandant le rythme du microprocesseur 9 et en particulier les ensembles d'adaptation 86 et 96.

Les impulsions S sont des commandes de synchronisation des registres tampon 32 et 33 avec le réseau GSM 39. A chaque réception d'impulsion S, le microprocesseur 9 transfère des données d'un bloc V110 du registre 32 au modem 35, par le registre de transit 92. Le modem 35 comporte, de façon classique pour le réseau GSM, un registre tampon, non représenté, permettant de stocker deux blocs de données, qui seront entrelacées avec ajout de redondance lors de leur émission radio, registre tampon qui permet donc d'assurer une émission régulière de paquets de bits entre les réceptions successives des blocs de données provenant du registre 32.

De même, ici par partage de temps entrelacé du bus, les données radio reçues par le modem 35 sont transférées au registre tampon 33. Cette synchronisation par les impulsions S évite ainsi tout risque d'erreur de transmission entre l'interface radio 30 et l'ensemble 10. Les registres tampon 31 à 34 qui, fonctionnellement, sont en fait une partie des moyens adaptateurs (86, 96), ont une taille suffisante pour contenir plusieurs blocs de données afin de tolérer des fluctuations dans le délai d'attente de la disponibilité des ensembles d'adaptation 86 et 96 (disponibilité du microprocesseur multitâche 9 pour effectuer les tâches symbolisées par les ensembles 86 et 96). Cependant, le flux de données V24 doit, en moyenne, être adapté au flux de données V110, donc au rythme du réseau GSM 39, que traduisent les impulsions S et M. Il a été trouvé que les impulsions M, à période N cinq fois plus faible que la période moyenne des impulsions S, définissaient une période N correspondant à une transmission d'un nombre entier d'octets, indépendamment du choix de vitesse parmi celles prévues sur le réseau GSM 39, permettant donc de traiter les données sous forme d'octets. De ce fait, on préfère ici synchroniser le cycle de fonctionnement global de la totalité des chaînes ou voies d'émission 11, 91, 31, 86, 32, 92, 30 et de réception 30, 93, 33, 96, 34, 94, 11 sur les impulsions de motif M, avec aussi, dans ce cycle global, des cycles plus courts pour par exemple les transferts de données, selon la périodicité des impulsions S.

Entre deux impulsions de motif M, un motif de cinq blocs de données à émettre est traité dans l'ensemble 86, et de même en réception dans l'ensemble 96 pour en particulier vérifier l'intégrité des octets de données reçues du réseau 39. Cinq impulsions S commandent ainsi, en émission et en réception, cinq transferts successifs de blocs formant au total un motif. En émission, les données sont ainsi successivement transmises du circuit 11 d'interface V24 au registre tampon 31 où elles sont stockées temporairement, et ensuite extraites en synchronisme avec le réseau 39 par les impulsions S pour être ensuite adaptées par le codage V110, adapté à leur transmission à longue distance, dans l'ensemble 86, et transmises au circuit radio 30 à travers le registre tampon de sortie en émission 32. En réception, les données au format V110 sont successivement transférées du circuit radio 30 au registre tampon 33 où elles sont stockées temporairement, et ensuite extraites par les impulsions S en synchronisme avec le réseau 39 pour être adaptées (96) par un décodage du format V110 et transmises au registre tampon de sortie en réception 34 puis au circuit 11 et au PC 40, ce qui adapte le format et le débit côté PC 40.

Les transferts octet par octet sur le bus peuvent être répartis dans la période N des impulsions M, c'est-à-dire éventuellement discontinus, dans la mesure où le flux moyen prévu de données est écoulé sur cette période N.

De même, les circuits d'adaptation 86 et 96 doivent effectuer cette adaptation d'un motif dans cette même période N des impulsions M. En bref, il s'agit d'un fonctionnement en temps réel.

On conçoit que l'invention peut être mise en oeuvre par la réalisation d'un ensemble, ou module, ayant les fonctionnalités de cet exemple détaillé, la mobilité ou portabilité n'étant qu'une caractéristique annexe.

## Revendications

1. Procédé de transmission de données entre un réseau de radiocommunication (39), transmettant les données à un rythme déterminé, et des moyens de traitement de données (40; 95) raccordés au réseau (39) par des moyens d'accès (10, 11, 30) comportant des moyens radio (30) d'interface réseau, raccordés à des moyens adaptateurs de données (86, 96), interposés entre les moyens radio (30) et les moyens de traitement des données (40; 95) pour les adapter au réseau (39), dans lesquels transitent les données sous la commande de moyens séquenceurs (8), procédé **caractérisé par le fait qu'**on asservit les moyens séquenceurs (8) sur le rythme du réseau (39) pour synchroniser sur- celui-ci le transit des données à travers les moyens adaptateurs (86, 96).

2. Procédé de transmission selon la revendication 1, dans lequel on commande, en synchronisme avec le rythme du réseau (39), au moins un registre tampon (32; 33), d'interface avec les moyens radio (30), des moyens adaptateurs (86, 96).

3. Procédé de transmission selon la revendication 2, dans lequel on commande, en synchronisme avec le rythme du réseau (39), des circuits d'adaptation de données (87, 88; 97, 98), reliés au registre tampon (32; 33), des moyens adaptateurs.

4. Procédé de transmission selon l'une des revendications 1 à 3, dans lequel on remplit un registre tampon (31) par des données à émettre provenant des moyens de traitement (40; 95), et on engendre, dans une unité centrale (10) regroupant les moyens adaptateurs de données (86, 96) et les moyens séquenceurs, des impulsions d'extraction synchronisées sur le rythme du réseau (39) pour extraire les données du registre tampon (31), les adapter par un codage (86) et les transmettre (32) aux moyens radio (30).

5. Procédé selon l'une des revendications 1 à 3, dans lequel on stocke les données provenant des moyens radio (30) dans un registre tampon (33), et on engendre, dans une unité centrale (10) regroupant les moyens adaptateurs de données (86, 96) et les moyens séquenceurs, des impulsions d'extraction synchronisées sur le rythme du réseau (39) pour extraire les données du registre tampon (33), les adapter par un décodage (96) et les transmettre (34, 11) aux moyens de traitement (40; 95).

6. Module de transmission de données pour la mise en oeuvre du procédé de la revendication 1, comportant des moyens radio (30) d'interface avec un réseau de radiocommunication (39) transmettant les données à un rythme déterminé, des moyens adaptateurs de données (86, 96), agencés pour être interposés entre les moyens radio (30) et des moyens de traitement de données (40; 95) et les adapter au réseau (39), dans lesquels transitent les données sous la commande de moyens séquenceurs (8), **caractérisé par le fait que** les moyens séquenceurs (8) et les moyens adaptateurs (86, 96) sont regroupés en une unité centrale (10) comportant des moyens (81) d'asservissement en fréquence des moyens séquenceurs (8) sur le rythme du réseau (39).

7. Module de transmission selon la revendication 6, dans lequel les moyens d'asservissement en fréquence comportent une base de temps (8) pilotée par le réseau (39).

8. Module de transmission selon la revendication 7, dans lequel la base de temps comporte des diviseurs de fréquence (82) agencés pour diviser le rythme du réseau (39) et commander cycliquement des échanges de données entre les moyens adaptateurs (86, 96) et les moyens radio (30).

9. Module de transmission selon la revendication 8, dans lequel les moyens adaptateurs (86; 96) comportent au moins un registre tampon (32; 33) d'échange avec les moyens radio (30), commandé par les diviseurs de fréquence (82).

10. Module de transmission selon l'une des revendications 8 et 9, dans lequel les moyens adaptateurs (86; 96) sont reliés à au moins un registre tampon (31; 34) d'échange avec les moyens de traitement (40; 95), commandé par les diviseurs de fréquence (82).

11. Module de transmission selon l'une des revendications 8 à 10, dans lequel les moyens adaptateurs (86, 96) sont agencés pour procéder à l'adaptation en synchronisme avec lesdits échanges avec les moyens radio (30).

12. Module de transmission selon la revendication 11, dans lequel les moyens séquenceurs (8) sont agencés pour commander successivement un transfert de données des moyens de traitement (40; 95) à un registre tampon d'entrée (31) de voie émission, de celui-ci aux moyens adaptateurs (86) et de ceux-ci aux moyens radio (30) à travers un registre de sortie (32) en émission.

13. Module de transmission selon l'une des revendications 11 et 12, dans lequel les moyens séquenceurs (8) sont agencés pour commander successivement un transfert de données des moyens radio (30) à un registre d'entrée (33) de voie réception, de celui-ci aux moyens adaptateurs (96) et de ceux-ci aux moyens de traitement (40; 95) à travers un registre de sortie en réception (34).

14. Module de transmission selon l'une des revendications 6 à 13, dans lequel les circuits de traitement (95) sont intégrés au module.

15. Terminal de radiotéléphonie intégrant le module selon l'une des revendications 6 à 13.

16. Terminal selon la revendication 15, dans lequel les circuits de traitement (95) sont intégrés au module.

17. Terminal selon la revendication 16, dans lequel les moyens de traitement (95) sont agencés pour traiter des données échangées avec le réseau INTERNET.

## Patentansprüche

1. Verfahren zur Übertragung von Daten zwischen einem Funknetz (39), das die Daten mit einem bestimmten Takt überträgt, und Datenverarbeitungsmitteln (40; 95), die mit dem Netz (39) mit Hilfe von Zugangsmitteln (10, 11,30) verbunden sind, die Netzschnittstellenfunkmittel (30) aufweisen, die mit zwischen den Funkmitteln (30) und den Datenverarbeitungsmitteln (40; 95) angeordneten Datenanpassungsmitteln (86, 96) zur Anpassung der Daten an das Netz (39) verbunden sind, durch welche die Daten unter der Steuerung von Ablauffolgesteuermitteln (8) hindurchgeleitet werden, wobei das Verfahren **dadurch gekennzeichnet ist, daß** man die Ablauffolgesteuermittel (8) auf den Takt des Netzes (39) servoregelt, um damit den Datentransport durch die Anpassungsmittel (86, 96) zu synchronisieren.

2. Verfahren zur Übertragung nach Anspruch 1, wobei man synchron zum Takt des Netzes (39) wenigstens ein eine Schnittstelle zu den Funkmitteln (30) bildendes Pufferregister (32; 33) der Anpassungsmittel (86, 96) steuert.

3. Verfahren zur Übertragung nach Anspruch 2, wobei man synchron zum Takt des Netzes (39) mit dem Pufferregister (32; 33) verbundene Datenanpassungsschaltungen (87, 88; 97, 98) der Anpassungsmittel steuert.

4. Verfahren zur Übertragung nach einem der Ansprüche 1 bis 3, wobei man ein Pufferregister (31) mit von den Verarbeitungsmitteln (40; 95) kommenden zu sendenden Daten füllt, und man in einer die Datenanpassungsmittel (86, 96) und die Ablauffolgesteuermittel umfassenden Zentraleinheit (10) mit dem Takt des Netzes (39) synchronisierte Ausleseimpulse erzeugt, um die Daten des Pufferregisters (31) auszulesen, sie mit Hilfe einer Codierung (86) anzupassen und sie an die Funkmittel (30) zu übertragen (32).

5. Verfahren nach einem der Ansprüche 1 bis 3, wobei man die von den Funkmitteln (30) kommenden Daten in einem Pufferregister (33) speichert, und man in einer die Datenanpassungsmittel (86, 96) und die Ablauffolgesteuermittel umfassenden Zentraleinheit (10) mit dem Takt des Netzes (39) synchronisierte Ausleseimpulse erzeugt, um die Daten des Pufferregisters (33) auszulesen, sie mit Hilfe einer Decodierung (96) anzupassen und sie an die Verarbeitungsmittel (40; 95) zu übertragen.

6. Datenübertragungsmodul zur Durchführung des Verfahrens nach Anspruch 1, mit Funkmitteln (30), die eine Schnittstelle zu einem Funknetz (39) bilden, das die Daten mit einem bestimmten Takt überträgt, mit Datenanpassungsmitteln (86, 96), die derart ausgebildet sind, daß sie zwischen den Funkmitteln (30) und den Datenverarbeitungsmitteln (40; 95) angeordnet werden können, und daß sie die Daten an das Netz (39) anpassen können und durch welche die Daten unter der Steuerung von Ablauffolgesteuermitteln (8) hindurch geleitet werden, **dadurch gekennzeichnet, daß** die Ablauffolgesteuermittel (8) und die Anpassungsmittel (86, 96) in einer Zentraleinheit (10) zusammengefaßt sind, die Mittel (81) zur servo-Regelung der Frequenz der Ablauffolgesteuermittel (8) auf den Takt des Netzes (39) aufweist.

7. Übertragungsmodul nach Anspruch 6, wobei die Frequenzregelmittel einen von dem Netz (39) gesteuerten Taktgeber(8) aufweisen.

8. Übertragungsmodul nach Anspruch 7, wobei der Taktgeber Frequenzteiler (82) aufweist, die derart ausgebildet sind, daß sie den Takt des Netzes (39) teilen können und zyklisch den Datenaustausch zwischen den Anpassungsmitteln (86, 96) und den Funkmitteln (30) steuern können.

9. Übertragungsmodul nach Anspruch 8, wobei die Anpassungsmittel (86; 96) wenigstens ein von den Frequenzteilern (82) gesteuertes Pufferregister (32; 33) zum Austausch mit den Funkmitteln (30) aufweisen.

10. Übertragungsmodul nach Anspruch 8 oder 9, wobei die Anpassungsmittel (86; 96) mit wenigstens einem von den Frequenzteilern (82) gesteuerten Pufferregister (31; 34) zum Austausch mit den Verarbeitungsmitteln (40; 95) verbunden sind.

11. Übertragungsmodul nach einem der Ansprüche 8 bis 10, wobei die Anpassungsmittel (86, 96) derart ausgebildet sind, daß sie die Anpassung synchron zu dem Austausch mit den Funkmitteln (30) durchführen können.

12. Übertragungsmodul nach Anspruch 11, wobei die Ablauffolgesteuermittel (8) derart ausgebildet sind, daß sie beim Senden nacheinander eine Datenübertragung von den Verarbeitungsmitteln (40; 95) zu einem Sendekanaleingabepufferregister (31), von diesem zu den Anpassungsmitteln (86) und von diesen zu den Funkmitteln (30) über ein Ausgaberegister (32) steuern können.

13. Übertragungsmodul nach Anspruch 11 oder 12, wobei die Ablauffolgesteuermittel (8) derart ausgebildet sind, daß sie beim Empfang nacheinander eine Datenübertragung von den Funkmitteln (30) zu einem Empfangskanaleingaberegister (33), von diesem zu den Anpassungsmitteln (96) und von diesen zu den Verarbeitungsmitteln (40; 95) über ein Ausgaberegister (34) steuern können.

14. Übertragungsmodul nach einem der Ansprüche 6 bis 13, wobei die Verarbeitungsschaltungen (95) in das Modul integriert sind.

15. Funktelefon, in das das Modul nach einem der Ansprüche 6 bis 13 integriert ist.

16. Funktelefon nach Anspruch 15, wobei die Verarbeitungsschaltungen (95) in das Modul integriert sind.

17. Funktelefon nach Anspruch 16, wobei die Verarbeitungsmittel (95) derart ausgebildet sind, daß sie mit dem Internet-Netz ausgetauschte Daten verarbeiten können.

## Claims

1. Method for transmitting data between a radio communication network (39), transmitting data at a particular flow rate, and data processing means (40; 95) connected to the network (39) by access means (10, 11, 30) with network interface radio means (30), connected to data adaptor means (86, 96), inserted between the radio means (30) and the data processing means (40; 95) to adapt them to the network (39), in which the data pass under the control of sequencing means (8), this method being **characterised by** the fact that the sequencing means (8) are servo-controlled by the flow rate of the network (39) in order to synchronise on it the transit of data through the adaptor means (86, 96).

2. Method of transmission according to Claim 1, whereby at least one buffer register (32, 33), interface with the radio means (30), of the adaptor means (86, 96) are controlled, in synchronisation with the flow rate of the network (39).

3. Method of transmission according to Claim 2, whereby data adaptation circuits (87, 88; 97, 98), connected to the buffer register (32; 33) of the adaptor means, are controlled, in synchronisation with the flow rate of the network (39).

4. Method of transmission according to one of the Claims 1 to 3, whereby a buffer register (31) is filled with data to be transmitted, originating from the processing means (40; 95), and, in a central unit (10) grouping together the data adaptor means (86, 96), and the sequencing means, extraction pulses synchronised on the flow rate of the network (39) are created to extract the data from the buffer register (31), to adapt them by a coding arrangement (86) and to transmit them (32) to the radio means (30).

5. Method according to one of the Claims 1 to 3, whereby the data originating from the radio means (30) are stored in a buffer register (33), and, in a central unit (10) grouping together the data adaptor means (86, 96) and the sequencing means, extraction pulses are created, synchronised on the flow rate of the network (39) to extract the data from the buffer register (33), to adapt them by a decoding arrangement (96) and to transmit them (34, 11) to the processing means (40: 95).

6. Data transmission module for carrying out the process of Claim 1, comprising radio means (30), interface with a radio communication network (39) transmitting the data at a particular flow rate, data adaptor means (86, 96), arranged to be inserted between the radio means (30) and data processing means (40; 95) and to adapt them to the network (39), in which the data under the control of sequencing means (8) pass through, **characterised by** the fact that the sequencing means (8) and the adaptor means (86, 96) are grouped together in a central unit (10) which has means (81) for frequency servo-controlling the sequencing means (8) on the flow rate of the network (39).

7. Transmission module according to Claim 6, whereby the frequency-servo controlling means have a time base (8) controlled by the network (39).

8. Transmission module according to Claim 7, whereby the time base contains frequency dividers (82) arranged to divide the flow rate of the network (39) and cyclically control data exchanges between the adaptor means (86, 96) and the radio means (30).

9. Transmission module according to Claim 8, whereby the adaptor means (86; 96) have at least one buffer register (32; 33) for exchange with the radio means (30), controlled by the frequency dividers (82).

10. Transmission module according to one of the Claims 8 and 9, whereby the adaptor means (86; 96) are connected to at least one buffer register (31; 34) for exchange with the processing means (40; 95), controlled by the frequency dividers (82).

11. Transmission module according to one of the Claims 8 to 10, whereby the adaptor means (86, 96) are arranged to proceed with the adaptation in synchronisation with the said exchanges with the radio means (30).

12. Transmission module according to Claim 11, whereby the sequencing means (8) are arranged to control in succession a transfer of data from the processing means (40; 95) to a transmission input buffer register (31), from it to the adaptor means (86) and from them to the radio means (30) through a transmission output register (32).

13. Transmission module according to one of the Claims 11 and 12, whereby the sequencing means (8) are arranged to control in succession a transfer of data from the radio means (30) to a receiving input register (33), from it to the adaptor means (96) and from them to the processing means (40; 95) through a receiving output register (34).

14. Transmission module according to one of the Claims 6 to 13, whereby the processing circuits (95) are incorporated in the module.

15. Radiotelephone terminal incorporating the module according to one of the Claims 6 to 13.

16. Terminal according to Claim 15, whereby the processing circuits (95) are incorporated in the module.

17. Terminal according to Claim 16, whereby the processing means (95) are arranged to process data exchanged with the INTERNET network.
